# EUROPÄISCHE PATENTSCHRIFT

(11) **EP 1 160 136 B1**
(45) Veröffentlichungstag und Bekanntmachung des Hinweises auf die Patenterteilung: **06.08.2003**
(21) Anmeldenummer: 01109104.8
(22) Anmeldetag: 12.04.2001
(51) Int. Cl.: B60R 21/13

(54) **Überroll-Schutzsystem für Kraftfahrzeuge**
Roll-over protection system for vehicles
Système de protection pour véhicules en cas de retournement

(30) Priorität: 03.06.2000 DE 10027753
(43) Veröffentlichungstag der Anmeldung: 05.12.2001
(73) Patentinhaber: ISE Innomotive Systems Europe GmbH, 51702 Bergneustadt (DE)
(72) Erfinder: Nowack, Reinhard, 57489 Drolshagen (DE); Nass, Michael, 51702 Bergneustadt (DE); Hartebrodt, Raphael, 57489 Drolshagen (DE); Janisch, Mirko, 53721 Siegburg (DE)
(74) Vertreter: Fuchs Mehler Weiss & Fritzsche

(56) Entgegenhaltungen:
- DE-A- 4 342 400
- DE-A- 19 501 584
- DE-A- 19 523 790

## Beschreibung

Die Erfindung bezieht sich auf ein Überroll-Schutzsystem für Kraftfahrzeuge, mit einem nach oben ausfahrbaren Überrollkörper, der mittels eines Haltegliedes, das im lösbaren mechanischen Wirkeingriff mit einem Haltemechanismus eines Auslösesystems steht, das ein im Gefahrenfall sensorgesteuert aktivierbares pyrotechnisches Element zur lösenden Betätigung des Haltemechanismus aufweist, in einer unteren Ruhestellung halterbar ist.

Überrollschutzsysteme, die in mannigfaltigen Ausführungsformen, beispielsweise durch die DE 43 14 538 A1 und die gattungsbildende DE 195 23 790 A1 bekannt geworden sind, sollen typischerweise die Insassen von Cabriolets oder Sportwagen im Falle eines Überschlages vor einem Aufprall des Körpers auf die Fahrbahn bzw. den Erdboden schützen. Sie sind bei einer typischen Ausführungsform in Kassetten-Bauweise direkt hinter den Fahrzeugsitzen angeordnet und weisen einen geführten Überrollkörper, vorzugsweise einen Überrollbügel auf. Dieser Überrollkörper wird im Normalzustand, gegen die Kraft einer Feder vorgespannt, mittels einer Haltevorrichtung, die über einen Haltebolzen im Wirkeingriff mit einer Halteklinke eines Auslösesystems steht, in einer unteren Ruhelage gehalten, und wird im Gefahrenfall, ausgelöst durch entsprechende Sensoren am Fahrzeug, sehr schnell in eine obere verriegelte, schützende Endposition gefahren. Neben vorgespannten Federn als Energiespeicher und Schnellantrieb kommen auch andere Systeme in Betracht, wie beispielsweise pyrotechnische Antriebe, hydraulische oder pneumatische Systeme, aber auch hochdrehende elektromotorische Spindelantriebe oder dergleichen.

Derartige ausfahrbare Überrollbügel finden insbesondere bei solchen Fahrzeugen Verwendung, bei denen aus optischen Gründen auf einen starren, d.h. fest eingebauten Überrollbügel, verzichtet wird.

Gemäß dem Stand der Technik wird das Auslösesystem typischerweise durch einen Auslösemagneten gebildet, dem ein Auslösestift als Anker zugeordnet ist, und der im Gefahrenfall sensorgesteuert aktiviert wird und dabei den Stift derart bewegt, daß er unter Freigabe des Haltebolzens die Halteklinke verschwenkt. Bei einem derartigen System sind typbedingt die Auslösekräfte beschränkt, so daß besondere Maßnahmen am Halteglied und am Auslösesystem getroffen werden müssen, um diese möglichst klein zu halten.

Es ist durch die DE 43 42 401 A1 auch bekannt, das Auslösesystem durch eine pyrotechnische Einrichtung zu realisieren. Im Hinblick darauf, daß im Kraftfahrzeugbereich immer mehr pyrotechnische Auslösesysteme, insbesondere in zugehörigen Sicherheitssystemen, wie Airbags und dergleichen, Anwendung finden und diese daher relativ preiswert geworden sind, geht inzwischen der Trend auch zur praktischen Anwendung dieser bekannten pyrotechnischen Auslösesysteme bei Überroll-Schutzsystemen.

Nun besteht bei den Überroll-Schutzsystem die Vorschrift, daß sie für Prüfzwecke auslösbar sein müssen. So werden die Überroll-Schutzsysteme am Ende der Montagelinie einmal ausgelöst, um ihre Funktion zu prüfen. Weiterhin werden im Laufe der Inspektionen Testauslösungen erforderlich. Bei Auslösesystemen in Form der Auslösemagnete konnte die Auslösung durch einfaches Anlegen einer Spannung an den Auslösemagneten bewerkstelligt werden. Bei Auslösesystemen auf der Basis von pyrotechnischen Elementen, die vorzugsweise in Form einer Patrone vorliegen, muß die Patrone gezündet werden. Diese explosionsartige Zündung verursacht jedoch nicht nur einen unerwünschten Lärm, sondern auch einen relativ hohen Aufwand, weil jeweils eine neue, teure Patrone unter erschwertem Montageaufwand eingesetzt werden muß.

Der Erfindung liegt die Aufgabe zugrunde, das eingangs bezeichnete Überroll-Schutzsystem für Kraftfahrzeuge, mit einem nach oben ausfahrbaren Überrollkörper, der mittels eines Haltegliedes, das im lösbaren mechanischen Wirkeingriff mit einem Haltemechanismus eines Auslösesystems steht, das ein im Gefahrenfall sensorgesteuert aktivierbares pyrotechnisches Element zur lösenden Betätigung des Haltemechanismus aufweist, in einer unteren Ruhestellung halterbar ist, hinsichtlich des Auslösesystems so auszubilden, daß auf einfache Weise ohne Einzelfall-Aufwand auch Auslösungen für Prüfzwecke möglich sind.

Die Lösung dieser Aufgabe gelingt gemäß der Erfindung dadurch, daß zusätzlich zu dem pyrotechnischen Element ein zweiter, sich bei einer Auslösung nicht verbrauchender Aktuator zur Betätigung des Haltemechanismus vorgesehen ist.

Das pyrotechnische Element dient daher der sensorgesteuerten Auslösung, d.h. der Freigabe der Haltevorrichtung durch den Haltemechanismus des Auslösesystems im Gefahrenfall, wogegen der zusätzliche Aktuator zur Auslösung für Prüfzwecke verwendet wird. Da er sich dabei nicht wie ein pyrotechnisches Element selbst verbraucht, ist die Auslösung für Prüfzwecke auf einfache Weise ohne Zusatzaufwand bei der einzelnen Auslösung wiederholt durchführbar.

Gemäß einer ersten Weiterbildung der Erfindung ist das Überroll-Schutzsystem so ausgeführt, daß der zusätzliche Aktuator durch eine elektromotorische Antriebsanordnung gebildet ist.

Eine derartige Anordnung ermöglicht durch einfaches Anlegen einer elektrischen Spannung, z.B. aus dem Bordnetz, an die Antriebsanordnung eine Aktivierung des zusätzlichen Aktuators, ohne daß dieser sich dabei verbraucht, d.h. der Auslösevorgang kann wiederholt ohne weitere Aufwendungen vorgenommen werden. Eine besonders wirksame Auslösung läßt sich dabei vornehmen, wenn die Antriebsanordnung einen elektrischen Getriebemotor aufweist.

Gemäß einer zweiten Weiterbildung der Erfindung ist das Überroll-Schutzsystem so ausgeführt, daß der zusätzliche Aktuator durch einen Elektromagneten gebildet ist. Auch bei dieser Weiterbildung der Erfindung kann, wie im Fall der ersten Weiterbildung, durch einfaches Anlegen einer elektrischen Spannung (betrieblich aus dem Bordnetz) ohne weiteren Aufwand eine wiederholte Auslösung vorgenommen werden.

Alternativ zu diesen elektrischen Weiterbildungen kann gemäß einer dritten Weiterbildung das Überroll-Schutzsystem auch so ausgeführt sein, daß der zusätzliche Aktuator durch ein pneumatisches oder hydraulisches Verstellelement gebildet ist. Diese Weiterbildung empfiehlt sich immer dann, wenn im Kraftfahrzeug pneumatische oder hydraulische Steuerleitungen ohnehin vorhanden sind.

Im einfachsten Fall kann gemäß einer vierten Weiterbildung der Erfindung das Überroll-Schutzsystem auch so ausgeführt sein, daß der zusätzliche Aktuator durch einen manuell mechanisch betätigbaren mechanischen Aktuator gebildet ist. In einem solchen Fall ist daher der mechanische Aktuator über eine mechanische Verbindung, z.B. einen Seilzug, mit einem im Fahrzeug griffbereit angebrachten Handhebel verbunden.

Gemäß einer Ausgestaltung der Erfindung kann das Überroll-Schutz-System so ausgebildet sein, daß der pyrotechnische Aktuator und der zusätzliche Aktuator separate Komponenten sind, die getrennt im Auslösesystem montiert werden.

Eine einfachere Montage ergibt sich gemäß einer anderen Ausgestaltung der Erfindung, wenn der pyrotechnische Aktuator mit dem zusätzlichen Aktuator zu einem Modul integriert ist. Die beiden Aktuatoren können dann mit nur einem gemeinsamen Montagevorgang im Auslösesystem montiert werden.

Für die Ausbildung des Haltemechanismus im Auslösesystem stehen eine Reihe von konstruktiven Möglichkeiten zur Verfügung. Eine besonders einfache und hochwirksame, sichere Konstruktion ergibt sich in Verbindung mit einem stiftausstoßenden pyrotechnischen Aktuator, wenn der Haltemechanismus im Auslösesystem durch eine an ihm angelenkte Sperrklinke gebildet ist, mit einem hakenförmigen einen Ende zum lösbaren Wirkeingriff mit dem Halteglied des Überrollkörpers und mit einem hebelarmförmigen Fortsatz am anderen Ende, an dem am unteren Ende der zusätzliche Aktuator und näher zum Anlenkpunkt hin der pyrotechnische Aktuator angreift.

Andere Konstruktionen sind denkbar, auch mit stifteinziehenden pyrotechnischen Aktuatoren, die auch von der Ausgestaltung des Haltegliedes am Überrollkörper mitbestimmt werden.

Eine besonders einfache Möglichkeit zur Auswechslung des pyrotechnischen Aktuators nach einer Fehlauslösung ist gegeben, wenn der pyrotechnische Aktuator als Patrone ausgebildet ist, der mittels einer verklippbaren Haltespange gehaltert ist.

Durch einfaches Entklippen und Verklippen der Haltespange nach dem Austausch der pyrotechnischen Patrone ist eine einfache Auswechselung einer verbrauchten pyrotechnischen Patrone möglich.

Anhand eines in den Zeichnungen dargestellten Ausführungsbeispieles wird die Erfindung näher erläutert, wobei sich auch weitere Ausgestaltungen der Erfindung ergeben.

Es zeigen:
- Fig. 1: in einer teilweise geschnittenen Front-Draufsicht die Grundelemente eines Überroll-Schutzsystems in Kassettenbauweise, bei dem das erfindungsgemäße Auslösesystem angewendet wird, und
- Fig. 2: in einer vergrößerten Ausschnitt-Darstellung aus Fig. 1 den näheren Aufbau des erfindungsgemäßen Doppel-Auslösesystem.

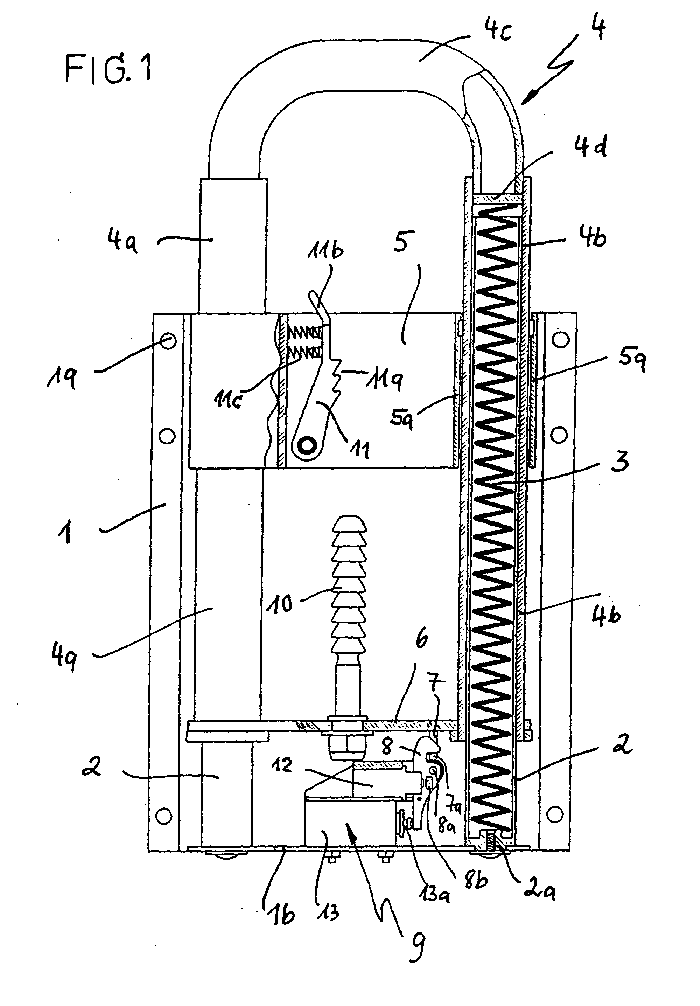

Die Fig. 1 zeigt in einer teilweise geschnittenen Front-Draufsicht die Grundelemente einer bevorzugten, z.B. durch die DE 43 42 400 A1 bekannten Ausführungsform eines Überroll-Schutzsystems in Kassettenbauweise, bei dem das erfindungsgemäße Auslösesystem beispielsweise angewendet wird.

In einem Kassettengehäuse 1, das über Befestigungslöcher 1 a in seitlichen Befestigungslaschen fahrzeugfest verbindbar ist, z.B. an dem Fahrzeugsitz oder an der Rückwand des Cabriolet, sind zwei Standrohre 2 an dem Bodenteil 1 b des Kassettengehäuses 1 fest angebracht, beispielsweise wie dargestellt, mittels einer Schraubverbindung 2 a.

In den beiden Standrohren 2 ist jeweils eine Druckfeder 3 angeordnet, die sich in der Darstellung nach Fig. 1 im vorgespannten Zustand befindet und bei einer noch zu beschreibenden Auslösung im Gefahrenfall zum Schnellantrieb des Überrollkörpers dient. Die Druckfeder wird dabei durch einen nicht dargestellten Federführungsbolzen in bekannter Weise geführt.

Dieser Überrollkörper besteht in Fig. 1 aus einem U-förmigen Überrollbügel 4 mit zwei Schenkelrohren 4 a und 4 b sowie einem oberen gekrümmten Rohr 4 c mit einer Stützscheibe 4 d, an der sich das obere Ende der Druckfeder 3 abstützt.

Die Schenkelrohre 4 a und 4 b umfassen die Standrohre 2 und werden durch die Standrohre 2 geführt, zusammen mit einem an dem Kassettengehäuse 1 befestigten Führungsblock 5, der Führungs-Gleitelemente 5 a besitzt. Die freien, unteren Enden der beiden Schenkelrohre 4 a , 4 b sind über eine Traverse 6 miteinander verbunden.

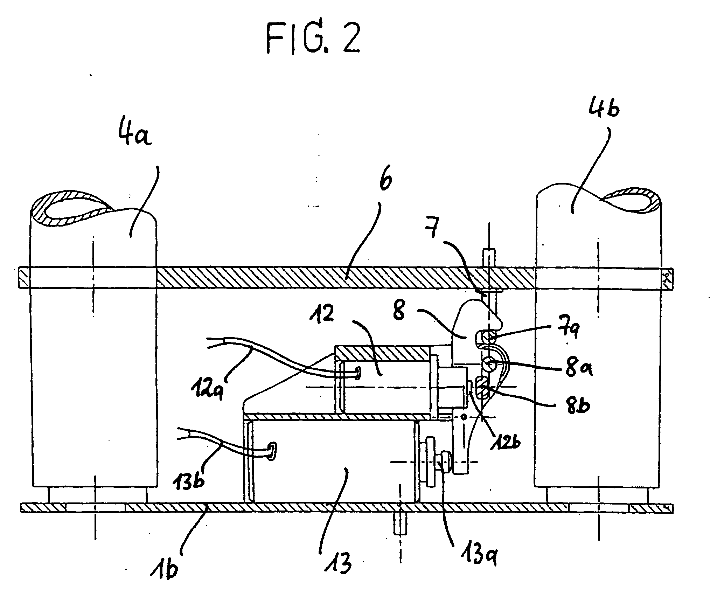

Um den Überrollbügel 4 in seiner in der Fig. 1 dargestellten, die Druckfeder 3 vorspannenden Ruhelage halten zu können, ist an der Traverse 6 ein Halteglied 7 mit einem Haltebolzen 7 a fest angebracht, das mit einer hakenförmigen Halte-Klinke 8 eines Auslösesystems 9, die um eine Achse 8 a federvorgespannt verschwenkbar an dem Auslösesystem 9 angelenkt ist, im Wirkeingriff steht. Dieses Auslösesystem 9, das Gegenstand der Erfindung ist, ist fahrzeugfest am Bodenteil 1 b des Kassettengehäuses 1 fest angebracht, z.B. wie dargestellt, mit diesem verschraubt. Es wird später, auch anhand der Fig. 2, näher erläutert.

Auf der Traverse 6 ist ferner ein Rastdorn 10 fest angebracht, der zusammen mit einer an dem Führungsblock 5 angelenkten Sperrklinke 11 der Verriegelung des Überrollbügels 4 im ausgefahrenen Zustand dient. Zu diesem Zweck besitzt die über Federn 11 c vorgespannte Sperrklinke 11 ein Zahnsegment 11 a für einen Wirkeingriff mit den Rücksprüngen des Rastdornes 10. Mittels eines Fortsatzes 11 b an der Sperrklinke 11 kann die Verriegelung manuell gelöst werden.

Wird das Auslösesystem 9 in bekannter Weise ausgelöst, insbesondere sensorgesteuert im Gefahrenfall, dann wird die Halteklinke 8 gegen den Uhrzeugersinn verschwenkt und gibt dabei den Haltebolzen 7 a frei. Durch die Vorspannung der Druckfeder 3 schnellt der Überrollbügel 4, einschließlich der Traverse 6 mit dem Rastdorn 10, nach oben und wird durch den Rastdorn im Wirkeingriff mit der Sperrklinke 11 gegen eine ungewollte Einfahrbewegung verriegelt, wobei durch die Länge des Rastdornes erreicht wird, daß diese Verriegelung auch bereits dann greift, wenn der Überrollbügel nicht vollständig die obere Endstellung erreicht.

Gemäß dem Stand der Technik wird das Auslösesystem typischerweise durch einen Auslösemagneten gebildet, dem ein Auslösestift als Anker zugeordnet ist, und der im Gefahrenfall sensorgesteuert aktiviert wird und dabei den Stift derart bewegt, daß er die Halteklinke verschwenkt. Bei einem derartigen System sind die Auslösekräfte beschränkt, so daß besondere Maßnahmen am Halteglied und am Auslösesystem getroffen werden müssen, um diese möglichst klein zu halten.

Es ist aber auch durch die eingangs zitierte DE 43 42 401 A1 bekannt, das Auslösesystem durch eine pyrotechnische Einrichtung zu realisieren. Im Hinblick darauf, daß im Kraftfahrzeugbereich immer mehr pyrotechnische Auslösesysteme, insbesondere in zugehörigen Sicherheitssystemen, Anwendung finden und diese daher relativ preiswert geworden sind, geht inzwischen der Trend zur praktischen Anwendung dieser bekannten pyrotechnischen Auslösesysteme bei Überroll-Schutzsystemen.

Nun besteht bei den Überroll-Schutzsystemen die Vorschrift, daß sie für Prüfzwecke auslösbar sein müssen. Bei Auslösesystemen in Form der Auslösemagnete konnte die Auslösung durch einfaches Anlegen einer Spannung an den Auslösemagneten bewerkstelligt werden. Bei Auslösesystem auf der Basis von pyrotechnischen Elementen, die vorzugsweise in Form einer Patrone vorliegen, muß die Patrone gezündet werden. Diese explosionsartige Zündung verursacht jedoch nicht nur einen unerwünschten Lärm, sondern ist auch relativ teuer, weil jeweils eine neue Patrone eingesetzt werden muß.

Um diese Nachteile zu vermeiden, sieht das erfindungsgemäße Auslösesystem neben einem pyrotechnischen Auslöseglied 12 zusätzlich ein vorzugsweise elektrisches Auslöseglied 13 vor, die beide auf die Halteklinke 8 wirken.

Das pyrotechnische Auslöseglied 12, das vorzugsweise patronenartig ausgebildet ist, ist über eine Leitung 12 a mit dem im Gefahrenfall auslösenden Sensor (nicht dargestellt) verbunden und besitzt einen im ausgelösten Zustand ausstoßbaren Stift 12 b, der dann in Wirkeingriff mit einem Anschlag 8 b der Halteklinke 8 gelangt und die Halteklinke, den Haltebolzen 7 a dabei freigebend, verschwenkt. Da die Ausstoßkraft relativ hoch ist, genügt der kurze Hebelarm zwischen Anschlag 8 b und dem Drehpunkt 8 a, um die Halteklinke 8 sicher zu verschwenken, ohne daß es besonderer Maßnahmen im Halteteil und an der Halteklinke bedarf.

So wie in der vorgenannten Schrift beschrieben, kann auch eine stifteinziehende Patrone verwendet werden, um eine Halteklinke zu verschwenken.

Der elektrische Aktuator 13, der vorzugsweise durch einen Magneten mit Ausstoßung eines Ankers 13 a im betätigten Zustand gebildet ist, kann auf einfache Weise durch Aufschaltung eines elektrischen Signals über eine Leitung 13 b für Prüfzwecke ausgelöst werden. Der Anker 13 a greift dabei am untersten Ende des langen Hebelarmes der Halteklinke 8 an, so daß auch die geringere Auslösekraft des Magneten ausreicht, um eine wirksame Auslösung zu erreichen.

Der zusätzliche Aktuator 13 kann, wie bereits erwähnt, ein Elektromagnet sein. Er kann alternativ dazu auch durch einen elektrischen Getriebemotor gebildet werden.

Bei Fahrzeugen mit hydraulischen oder pneumatischen Steuerleitungen kann der Aktuator auch durch ein pneumatisches oder hydraulisches Verstellelement gebildet werden.

In einer sehr einfachen Ausführungsform kann der zusätzliche Aktuator 13 auch durch einen manuell mechanisch betätigbaren mechanischen Aktuator gebildet werden, der z.B. über einen Seilzug oder dergleichen mit einem im Fahrzeug angebrachten Handhebel mechanisch verbunden ist. Im einfachsten Fall ist die Sperrklinke 8 drehfest auf einer Welle befestigt, die ihrerseits im Auslösesystem 9 drehbar gelagert ist. Diese Welle, die die Anlenkung der Sperrklinke bildet, weist eine Ausbildung für einen manuellen Verdreheingriff, z.B. einen Mehrkant-Fortsatz für eine Betätigung durch einen Schlüssel oder einen Schlitz für den Wirkeingriff eines Schraubendrehers auf.

Um einen einfachen Austausch des pyrotechnischen Elementes 12, insbesondere nach einer Fehlauslösung durch den Überschlagsensor, zu erzielen, ist die zugehörige pyrotechnische Patrone mit einer verklippbaren Haltespange gehaltert. Nach einer Auslösung kann dann auf einfache Weise die Haltespannung geöffnet werden, die anschließend nach Einlegen der Austauschpatrone wieder verklippt wird.

Der pyrotechnische Aktuator 12 und der zusätzliche Aktuator können als separate Elemente separat montiert werden. Sie können jedoch auch zu einem Modul integriert sein und gemeinsam montiert werden.

## Patentansprüche

1. Überroll-Schutzvorrichtung für Kraftfahrzeuge, mit einem nach oben ausfahrbaren Überrollkörper (4), der mittels eines Haltegliedes (7, 7 a), das im lösbaren mechanischen Wirkeingriff mit einem Haltemechanismus (8) eines Auslösesystems (9) steht, das ein im Gefahrenfall sensorgesteuert aktivierbares pyrotechnisches Element (12) zur lösenden Betätigung des Haltemechanismus (8) aufweist, in einer unteren Ruhestellung haltbar ist, **dadurch gekennzeichnet, daß** zusätzlich zu dem pyrotechnischen Element (12) ein zweiter, sich bei einer Auslösung nicht verbrauchender Aktuator (13) zur Betätigung des Haltemechanismus (8) vorgesehen ist.

2. Überroll-Schutzsystem nach Anspruch 1, **dadurch gekennzeichnet, daß** der zusätzliche Aktuator (13) durch eine elektromotorische Antriebsanordnung gebildet ist.

3. Überroll-Schutzsystem nach Anspruch 2, **dadurch gekennzeichnet, daß** die Antriebsanordnung einen elektrischen Getriebemotor aufweist.

4. Überroll-Schutzsystem nach Anspruch 1, **dadurch gekennzeichnet, daß** der zusätzliche Aktuator (13) durch einen Elektromagneten gebildet ist.

5. Überroll-Schutzsystem nach Anspruch 1, **dadurch gekennzeichnet, daß** der zusätzliche Aktuator (13) durch ein pneumatisches oder hydraulisches Verstellelement gebildet ist.

6. Überroll-Schutzsystem nach Anspruch 1, **dadurch gekennzeichnet, daß** der zusätzliche Aktuator (13) durch einen manuell mechanisch betätigbaren mechanischen Aktuator gebildet ist.

7. Überroll-Schutzsystem nach einem der Ansprüche 1 bis 6, **dadurch gekennzeichnet, daß** der pyrotechnische Aktuator (12) und der zusätzliche Aktuator (13) separate Komponenten sind, die getrennt im Auslösesystem (9) montiert werden.

8. Überroll-Schutzsystem nach einem der Ansprüche 1 bis 6, **dadurch gekennzeichnet, daß** der pyrotechnische Aktuator (12) mit dem zusätzlichen Aktuator (13) zu einem Modul integriert ist.

9. Überroll-Schutzsystem nach einem der Ansprüche 1 bis 8, **dadurch gekennzeichnet, daß** der Haltemechanismus im Auslösesystem (9) durch eine an ihm angelenkte Sperrklinke (8) gebildet ist, mit einem hakenförmigen einen Ende zum lösbaren Wirkeingriff mit dem Halteglied (7, 7 a) des Überrollkörpers (4) und mit einem hebelarmförmigen Fortsatz am anderen Ende, an dem am unteren Ende der zusätzliche Aktuator (13) und näher zum Anlenkpunkt (8 a) hin der pyrotechnische Aktuator (12) angreift.

10. Überroll-Schutzsystem nach Anspruch 6 und der Sperrklinke nach Anspruch 9, **dadurch gekennzeichnet, daß** die Sperrklinke (8) drehfest auf einer Welle befestigt ist, die ihrerseits im Auslösesystem drehbar gelagert ist und eine Ausbildung für einen manuellen Verdreheingriff, vorzugsweise einen Mehrkant-Fortsatz für eine Betätigung durch einen Schlüssel als mechanischen Aktuator aufweist.

11. Überroll-Schutzsystem nach einem der Ansprüche 1 bis 10, **dadurch gekennzeichnet, daß** der pyrotechnische Aktuator (12) als Patrone ausgebildet ist, der mittels einer verklippbaren Haltespange gehaltert ist.

## Claims

1. Roll-over protection device for motor vehicles, having an upwardly extendable roll-over body (4) which can be held in a lower rest position by means of a holding member (7, 7a) which is in releasable mechanical effective engagement with a holding mechanism (8) of a trigger system (9) having a pyrotechnic element (12) which, in the event of danger, can be activated under the control of a sensor for the releasing operation of the holding mechanism (8), **characterised in that**, in addition to the pyrotechnic element (12), a second actuator (13) for operating the holding mechanism (8) is provided, which actuator (13) is not exhausted when triggered.

2. Roll-over protection system according to claim 1, **characterised in that** the additional actuator (13) is formed by an electric motor drive arrangement.

3. Roll-over protection system according to claim 2, **characterised in that** the drive arrangement has an electric gear motor.

4. Roll-over protection system according to claim 1, **characterised in that** the additional actuator (13) is formed by an electromagnet.

5. Roll-over protection system according to claim 1, **characterised in that** the additional actuator (13) is formed by a pneumatic or hydraulic adjusting element.

6. Roll-over protection system according to claim 1, **characterised in that** the additional actuator (13) is formed by a manually operable mechanical actuator.

7. Roll-over protection system according to any one of claims 1 to 6, **characterised in that** the pyrotechnic actuator (12) and the additional actuator (13) are separate components which are mounted separately in the triggering system (9).

8. Roll-over protection system according to any one of claims 1 to 6, **characterised in that** the pyrotechnic actuator (12) is integrated with the additional actuator (13) to form a module.

9. Roll-over protection system according to any one of claims 1 to 8, **characterised in that** the holding mechanism in the triggering system (9) is formed by an articulated retaining catch (8), having one end in the form of a hook for releasable effective engagement with the holding member (7, 7a) of the roll-over body (4) and having at the other end a projection in the form of a lever arm, with which there come into contact the additional actuator (13) at the lower end and, closer to the point of articulation (8a), the pyrotechnic actuator (12).

10. Roll-over protection system according to claim 6 and the retaining catch according to claim 9, **characterised in that** the retaining catch (8) is fastened in a rotationally secure manner to a shaft which in turn is rotatably mounted in the triggering system and has provision for manual rotational operation, preferably a polygonal projection for operation by means of a key as the mechanical actuator.

11. Roll-over protection system according to any one of claims 1 to 10, **characterised in that** the pyrotechnic actuator (12) is in the form of a cartridge which is held by means of a holding clasp which can be clipped in place.

## Revendications

1. Système de protection pour véhicules en cas de retournement, avec un corps anti-retournement (4) amovible vers le haut, qui est, moyennant un élément de retenue (7, 7a), en engrènement actif mécanique amovible avec un mécanisme de retenue (8) d'un système de déclenchement (9), qui comprend un élément pyrotechnique (12) activable en cas de danger par une commande à capteur pour actionner le déclenchement du mécanisme de retenue (8), et qui peut être maintenu dans une position de repos inférieure, **caractérisé en ce qu'**il est prévu en plus de l'élément pyrotechnique (12) avec un deuxième actionneur (13), qui n'est pas utilisé lors d'un déclenchement, pour actionner le mécanisme de retenue (8).

2. Système de protection en cas de retournement selon la revendication 1, **caractérisé en ce que** l'actionneur supplémentaire (13) est construit comme une configuration d'entraînement électromotrice.

3. Système de protection en cas de retournement selon la revendication 2, **caractérisé en ce que** la configuration d'entraînement comprend un électro-réducteur.

4. Système de protection en cas de retournement selon la revendication 1, **caractérisé en ce que** l'actionneur supplémentaire (13) est construit comme un électro-aimant.

5. Système de protection en cas de retournement selon la revendication 1, **caractérisé en ce que** l'actionneur supplémentaire (13) est construit comme un élément réglable pneumatique ou hydraulique.

6. Système de protection en cas de retournement selon la revendication 1, **caractérisé en ce que** l'actionneur supplémentaire (13) est construit comme un actionneur mécanique mis en action mécanique manuellement.

7. Système de protection en cas de retournement selon l'une quelconque des revendications 1 à 6, **caractérisé en ce que** l'actionneur pyrotechnique (12) et l'actionneur supplémentaire (13) sont des composants distincts, qui sont montés séparément dans le système de déclenchement (9).

8. Système de protection en cas de retournement selon l'une quelconque des revendications 1 à 6, **caractérisé en ce que** l'actionneur pyrotechnique (12) et l'actionneur supplémentaire (13) sont intégrés à un seul module.

9. Système de protection en cas de retournement selon l'une quelconque des revendications 1 à 8, **caractérisé en ce que** le mécanisme de retenue dans le système de déclenchement (9) est construit comme un cliquet de blocage (8) articulé sur lui, avec une extrémité en forme de crochet pour l'engrènement actif amovible avec l'élément de retenue (7, 7 a) du corps anti-retournement (4) et un prolongement en forme de bras de levier à l'autre extrémité, qui s'engrène à l'extrémité inférieure de l'actionneur supplémentaire (13) et, plus près du point d'articulation (8 a), à l'actionneur pyrotechnique (12).

10. Système de protection en cas de retournement selon la revendication 6 et cliquet de blocage selon la revendication 9, **caractérisés en ce que** le cliquet de blocage (8) est fixé à rotation constante sur un arbre, qui de son côté est logé de manière à pouvoir pivoter dans le système de déclenchement et comprend une configuration pour un engrènement à torsion manuel, de préférence un prolongement polygonal à manipuler avec une clef comme actionneur mécanique.

11. Système de protection en cas de retournement selon l'une quelconque des revendications 1 à 10, **caractérisé en ce que** l'actionneur pyrotechnique (12) est configuré comme une cartouche qui est retenue par une broche de retenue pouvant être encliquetée.
